# FASCICULE DE BREVET EUROPEEN

(11) **EP 3 582 003 B1**
(45) Date de publication et mention de la délivrance du brevet: **23.08.2023**
(21) Numéro de dépôt: 19180042.4
(22) Date de dépôt: 13.06.2019
(51) Int. Cl.: G03B 17/56, F16M 11/20, G12B 9/04, F16P 7/00, G01P 15/00, F16M 11/28, F16M 11/32

(54) **DISPOSITIF DE PROTECTION LORS D'UNE CHUTE ET PROCEDE**
SCHUTZVORRICHTUNG IM FALLE EINES STURZES, UND VERFAHREN
FALL PROTECTION DEVICE AND METHOD

(30) Priorité: 13.06.2018 FR 1855192
(43) Date de publication de la demande: 18.12.2019
(73) Titulaire: Helite, 21121 Fontaine-les-Dijon (FR); CAMPENON BERNARD CENTRE EST, 69100 Villeurbanne (FR)
(72) Inventeur: QUEDDIS, Hicham, 21000 Dijon (FR); QUARREY, Alexandre, 74370 St Martin Bellevue (FR); SEJOURNANT, Estelle, 21000 Dijon (FR); CAUZA, Chiril, 21121 Fontaine-Les-Dijon (FR); WEBER, Antoine, 21120 Poiseul Les Saulx (FR); FRANCE, Sylvain, 21490 Bretigny (FR); BAVEREL, Camille, 21000 Dijon (FR); THEVENOT, Gerard, 21121 Fontaine-Les-Dijon (FR); PETIT JEAN, Cédric, 69603 Villeurbanne (FR)
(74) Mandataire: Talbot, Alexandre

(56) Documents cités:
- CN-A- 101 588 688
- CN-A- 108 194 805
- CN-A- 108 843 717
- KR-B1- 101 474 718

## Description

### Domaine technique de l'invention

L'invention est relative à un dispositif de protection lors de la chute d'un appareil et à un procédé de protection lors d'une chute.

### État de la technique

La chute d'un appareil contre le sol se traduit généralement par un choc traumatisant qui peut entrainer la destruction de l'appareil, l'apparition d'une ou plusieurs fissures qui réduisent la durée de vie de l'appareil. Il arrive également que la chute de l'appareil entraine une modification des réglages de l'appareil ce qui oblige à réaliser une révision voire une réparation.

Les risques de chute sont particulièrement importants lorsque l'appareil est disposé sur un trépied. L'appareil présente une masse non négligeable et cette masse est disposée en hauteur. Lorsque le trépied est disposé sur une surface non plane, lors d'une rafale de vent et/ou suite à une fausse manoeuvre, le trépied peut basculer et l'appareil heurte le sol.

Il en va de même lorsque l'appareil est disposé sur un monopied et qu'il échappe des mains de son utilisateur ou lorsque l'appareil se trouve sur un dispositif motorisé qui peut basculer à tout moment lors de son déplacement.

Il est donc particulièrement intéressant d'avoir un dispositif de protection qui soit en mesure de détecter la chute de l'appareil afin de réduire voire d'annuler les risques de destruction de cet appareil lors de la chute. Un tel dispositif de protection est montré dans le document KR 101 474 718. Cependant, il est important d'éviter la détection erronée de ce qui ressemble à une chute lors des multiples manipulations par l'utilisateur.

### Objet de l'invention

Un objet de l'invention consiste à prévoir un procédé de protection d'un appareil lors de la détection de la chute de l'appareil.

Le procédé de protection est remarquable en ce qu'il comporte :
- fournir un dispositif de protection comportant :
   ∘ un châssis muni d'une platine,
   ∘ un système de détection de chute configuré pour détecter un mouvement vers le bas du châssis représentatif d'un basculement du châssis et émettre un signal de chute,
   ∘ un dispositif de fixation configuré pour fixer l'appareil sur la platine du dispositif de protection,
- détecter un mouvement vers le bas du châssis représentatif d'un basculement et émettre un signal de chute au moyen du système de détection de chute,
- gonfler au moins une enveloppe destinée à entourer l'appareil lors de la réception du signal de chute au moyen du dispositif de gonflage, la au moins une enveloppe étant fixée au châssis.

Dans un développement, la au moins une enveloppe forme un anneau destiné à entourer l'appareil, préférentiellement à distance de l'appareil.

De manière préférentielle, la au moins une enveloppe comporte une première sous-enveloppe et une deuxième sous-enveloppe. La première sous-enveloppe est gonflée avant la deuxième sous-enveloppe, le gonflage de la première sous-enveloppe poussant la deuxième sous-enveloppe à distance du châssis avant le gonflage de la deuxième sous-enveloppe. Avantageusement, la deuxième sous-enveloppe est gonflée à partir d'un gaz provenant de la première sous-enveloppe.

Dans une configuration avantageuse, la première sous-enveloppe définit un anneau additionnel disposé face au châssis, l'anneau additionnel ayant un diamètre inférieur ou égal au diamètre de l'anneau, l'anneau étant relié à l'anneau additionnel par au moins deux canaux distincts.

Préférentiellement, avant gonflage, une bande sacrificielle entoure la au moins une enveloppe, la bande sacrificielle étant séparée du châssis par la au moins une enveloppe et dans lequel le gonflage de la au moins une enveloppe déchire la bande sacrificielle.

Dans une configuration préférentielle, la au moins une enveloppe forme un anneau ayant une section circulaire selon un plan perpendiculaire au châssis.

Selon l'invention, la détection d'un mouvement du châssis vers le haut précédant la détection dudit mouvement du châssis vers le bas empêche la réception d'un signal de secours par le dispositif de gonflage, la détection du mouvement du châssis vers le haut et la détection dudit mouvement du châssis vers le bas étant séparées de moins de 120 secondes et plus particulièrement de moins de 10 secondes.

Il est encore possible de prévoir que le dispositif de protection comporte un pied ou des moyens de fixation d'un pied au dispositif de protection, le dispositif de protection séparant le pied et l'appareil.

Préférentiellement, le dispositif de protection comporte un capteur de présence configuré pour détecter la fixation et l'absence de fixation de l'appareil sur le châssis, le capteur de présence étant configuré pour autoriser la réception du signal de chute par le dispositif de gonflage lorsque le capteur de présence détecte la fixation de l'appareil et empêcher la réception du signal de chute par le dispositif de gonflage lorsque le capteur de présence détecte l'absence de fixation de l'appareil.

Dans un mode de réalisation particulier, le capteur de présence est configuré pour éteindre le système de détection lorsque capteur de présence détecte l'absence de fixation de l'appareil.

Il est encore avantageux de prévoir que le capteur de présence comporte un capteur magnétique coopérant avec un élément perturbateur du champ magnétique représentatif de l'absence ou de la fixation de l'appareil à protéger sur le châssis.

De manière préférentielle, le premier dispositif de fixation comporte une tige mobile coopérant avec l'appareil et le capteur de présence détecte la position de la tige par rapport au châssis.

Un autre objet de l'invention consiste à prévoir un dispositif de protection capable de détecter une chute d'un appareil afin d'engager un processus de protection de l'appareil.

Le dispositif de protection comporte :
- un châssis muni d'un système de détection de chute, le système de détection de chute étant configuré pour détecter un mouvement vers le bas du châssis représentatif d'un basculement et émettre un signal de chute,
- un premier système de fixation configuré pour fixer le châssis avec un appareil à protéger,
- un dispositif de gonflage relié d'une part au système de détection et d'autre part à une enveloppe, le dispositif de gonflage étant configuré pour gonfler l'enveloppe lors de la réception du signal de chute.

Le dispositif de protection est remarquable en ce qu'il comporte un capteur de présence configuré pour détecter la présence et l'absence de l'appareil à protéger sur le châssis, le capteur de présence étant configuré pour autoriser la réception du signal de chute par le dispositif de gonflage lorsque le capteur de présence détecte la présence de l'appareil à protéger et empêcher la réception du signal de chute par le dispositif de gonflage lorsque le capteur de présence détecte l'absence de l'appareil à protéger.

Le système de détection est configuré de sorte que la détection d'un mouvement du châssis vers le haut précédant la détection dudit mouvement du châssis vers le bas empêche la réception d'un signal de chute par le dispositif de gonflage, la détection du mouvement du châssis vers le haut et la détection dudit mouvement du châssis vers le bas étant séparées de moins de 10 secondes.

Dans un développement, l'anneau présente une section circulaire dans un plan de coupe parallèle à une surface d'appui de l'appareil à protéger sur le châssis

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente une vue schématique d'un dispositif de protection selon l'invention,
- la figure 2 représente une vue schématique d'un autre dispositif de protection selon l'invention,
- les figures 3 et 4 représentent deux modes de réalisation schématiques d'un dispositif de protection,
- la figure 5 représente une vue schématique partielle d'un mode de réalisation particulier d'un dispositif de protection selon l'invention,
- la figure 6 représente une vue schématique d'un mode de réalisation particulier d'une enveloppe gonflée d'un dispositif de protection selon l'invention,
- la figure 7 représente une vue schématique d'un mode de réalisation particulier d'une enveloppe gonflée autour d'un appareil à protéger fixé sur un dispositif de protection selon l'invention.

### Description détaillée

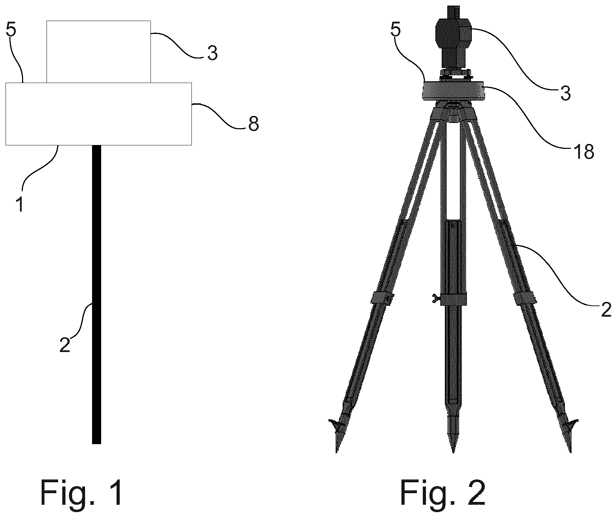

Les figures 1 et 2 illustrent deux modes de réalisation d'un dispositif de protection 1 monté sur un pied 2. Un appareil à protéger 3 est fixé sur le dispositif de protection 1. La figure 1 illustre un mode de réalisation où le dispositif de protection 1 est monté au sommet d'un mat 2 qui peut être un monopied manipulé par un utilisateur ou un mat 2 installé sur un appareil mobile autonome ou non.

La figure 2 illustre un mode de réalisation où le pied 2 est sous la forme d'un trépied. Selon les modes de réalisation, le pied 2 peut posséder un, deux, trois quatre ou plus de points d'appuis sur le sol. Selon les modes de réalisation, le dispositif de protection 1 peut être monté amovible ou inamovible par rapport au pied 2. Le dispositif 1 peut comporter un moyen de fixation au pied 2.

Le dispositif de protection 1 comporte préférentiellement un premier moyen de fixation 4 qui est configuré pour fixer l'appareil à protéger 3 avec le dispositif de fixation 1 et plus précisément pour fixer l'appareil à protéger 3 sur une platine 5 qui possède une surface sensiblement plane.

Il est particulièrement avantageux de prévoir que l'appareil à protéger 3 soit démontable par rapport au dispositif de protection 1. Cette configuration permet de remplacer rapidement le dispositif de protection 1 lorsque ce dernier a été activé afin de ne pas gêner l'exploitation de l'appareil à protéger 3. Cela permet également de pouvoir utiliser le dispositif de protection 1 avec plusieurs appareils à protéger 3 différents. Cela permet également de protéger un appareil déjà existant.

Le dispositif de protection 1 comporte un châssis 6 définissant la platine 5 destinée à recevoir l'appareil à protéger 3. Le dispositif de protection 1 comporte également un système de détection de chute 7 qui est configuré pour détecter un mouvement vers le bas du châssis 6 et émettre un signal de chute lorsque ce mouvement est détecté. Le mouvement détecté est avantageusement un basculement du châssis 6 monté sur le pied 2. Le basculement représente une rotation ou un déplacement correspondant sensiblement à une rotation. Le système de détection va détecter une perte d'altitude ainsi qu'une rotation du châssis indiquant que ce dernier devrait heurter le sol sur une de ces faces latérales.

Le dispositif de détection 1 est configuré pour détecter une chute avant que le châssis 6 n'atteigne le sol. Dans ces conditions, il est alors possible d'émettre un signal représentatif de la chute avant que la chute ne soit terminée et que l'impact au sol se traduise par une détérioration de l'objet à protéger 3.

Le premier système de fixation 4 est configuré pour fixer ensemble l'appareil à protéger 3 avec le châssis 6 et plus précisément fixer l'appareil 3 sur la surface externe de la platine 5. Le premier système de fixation 4 permet d'installer et de désinstaller l'appareil à protéger 3.

La protection de l'appareil 3 se fait au moyen d'une enveloppe 8 qui est gonflée par un gaz lors de la détection de la chute. Le dispositif de protection 1 comporte un dispositif de gonflage 9 qui est relié d'une part au système de détection et d'autre part à l'enveloppe 8. Le dispositif de gonflage 9 est configuré pour gonfler l'enveloppe 8 lors de la détection du signal de chute.

En d'autres termes, lorsque le système de détection 7 détecte un mouvement représentatif d'une chute préférentiellement par basculement, ce dernier émet un signal de chute qui est reçu par le dispositif de gonflage 9. Après réception de ce signal de chute, le dispositif de gonflage 9 envoie un gaz à l'intérieur de l'enveloppe 8 afin de gonfler l'enveloppe 8 qui va alors protéger l'appareil 3 en séparant l'appareil 3 et le sol.

Afin de faciliter l'utilisation du dispositif de protection 1, il est particulièrement avantageux de détecter les différentes situations qui ne correspondent pas un danger pour l'appareil à protéger 3.

De manière avantageuse, le système de détection de chute est configuré pour ne pas émettre un signal de chute en réponse à la détection d'un mouvement vertical vers le bas dépourvu d'une rotation du châssis. En effet, lors de l'installation de l'appareil, il est possible de réaliser un déplacement vertical, par exemple pour placer le pied dans une position adéquate. Il est alors préjudiciable de déclencher l'enveloppe 8 alors que l'utilisateur effectue les réglages.

Il est également avantageux de prévoir que le système de détection de chute soit configuré pour ne pas émettre un signal de chute en réponse à la détection d'un mouvement horizontal du châssis. Comme précédemment un déplacement horizontal de l'appareil est représentatif d'une phase de réglage et non d'une chute.

Le système de détection visant à détecter une chute avec rotation, par exemple par basculement de l'appareil monté sur le pied, l'enveloppe 8 est agencée pour s'interposer entre les parois latérales de l'appareil 3 et le sol. En d'autres termes, l'enveloppe 8 se trouve face aux parois latérales de l'appareil, autour de l'appareil et préférentiellement à distance de l'appareil afin de réduire l'effet d'un choc de l'appareil contre l'enveloppe. Le volume occupé par l'enveloppe peut faire face au châssis, mais il doit principalement se trouver face au centre de gravité de l'appareil à protéger 3.

Une chute du dispositif de protection désolidarisé de l'appareil 3 peut ne pas entrainer le gonflage de l'enveloppe 8.

L'appareil à protéger 3 étant monté amovible par rapport au dispositif de protection 1, il est particulièrement avantageux de prévoir l'utilisation d'un capteur de présence 10 qui soit configuré pour détecter la présence de l'appareil à protéger 3 sur le châssis 6 ou au contraire son absence. En effet, si l'appareil 3 n'est pas fixé au dispositif de protection 1, il n'est pas obligatoirement nécessaire de déclencher le gonflage de l'enveloppe 8.

Il est donc particulièrement avantageux de prévoir que le capteur de présence 10 soit configuré pour autoriser la réception du signal de chute par le dispositif de gonflage 9 lorsque le capteur de présence 10 détecte la présence de l'appareil à protéger 3 sur le châssis 6. Il est également particulièrement avantageux de prévoir que le capteur de présence 10 soit configuré pour empêcher la réception du signal de chute par le dispositif de gonflage 9 lorsque le capteur de présence 10 détecte l'absence de l'appareil à protéger 3.

Par exemple, l'installation du dispositif de protection 1 monté sur un pied 2 dans le coffre d'un véhicule peut être considérée comme une chute. Cependant, si l'appareil à protéger 3 a été préalablement démonté, il n'est pas nécessaire de déclencher le gonflage de l'enveloppe 8. Au contraire, si l'appareil 3 est fixé et que la vitesse de déplacement dans le coffre du véhicule peut entrainer une dégradation de l'appareil 3 en cas d'impact, un gonflage de l'enveloppe 8 est préférable. Il est donc particulièrement intéressant de dissocier ces deux événements et ainsi éviter un déclenchement intempestif de l'enveloppe 8 qui peut éventuellement blesser l'utilisateur.

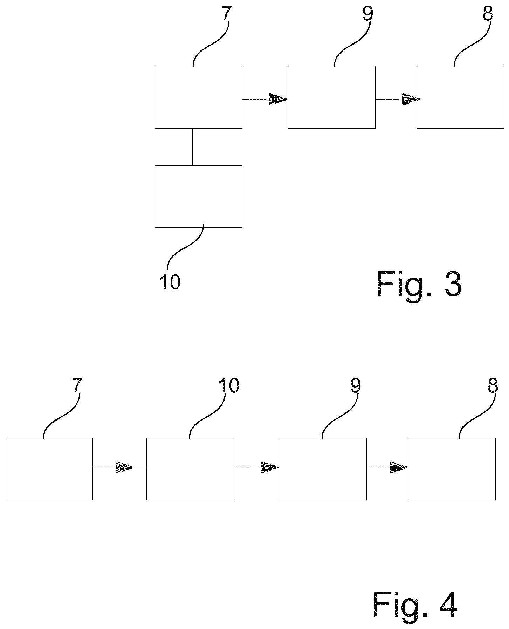

Dans un mode de réalisation particulièrement avantageux illustré à la figure 3, le capteur de présence 10 est configuré pour éteindre le système de détection 7 lorsque le capteur de présence 10 détecte l'absence de l'appareil à protéger 3 sur le dispositif de protection 1. Le retrait de l'appareil 3 hors du dispositif de protection 1 entraîne l'arrêt de l'alimentation aux bornes du système de détection 7. Ce dernier étant non alimenté, il n'est plus en mesure de fournir le signal de chute. Cette configuration permet d'économiser de l'énergie électrique lorsque l'appareil à protéger 3 est absent.

Dans une alternative de réalisation illustrée à la figure 4, le capteur de présence 10 peut être installé dans le chemin de transit du signal de chute depuis le système de détection 7 jusqu'au dispositif de gonflage 9. L'absence de l'appareil à protéger 3 vient bloquer la transmission du signal, alors que la présence de l'appareil autorise un transit du signal.

Comme indiqué précédemment, le dispositif de détection 7 peut être utilisé pour différents appareils à protéger 3. Les appareils peuvent avoir des formes différentes ainsi que des surfaces de contact différentes avec le châssis 6. Même s'il est possible d'utiliser un capteur faisant sailli de la platine 5 et sur lequel appuie l'appareil à protéger 3 lorsque ce dernier est fixé, il est particulièrement avantageux d'utiliser une autre solution.

Dans un mode de réalisation particulier, le capteur de présence 10 est configuré pour détecter une position prédéfinie du premier système de fixation 4 ce qui permet de discriminer la présence ou l'absence de l'appareil à protéger 3. Lorsque l'appareil 3 est fixé sur le système de protection 1, le premier dispositif de fixation se trouve dans la position prédéfinie. Au contraire lorsque l'appareil est absent, le premier dispositif de fixation 4 se trouve dans une position différente de la position précédente. Le capteur de présence 10 différencie ces deux positions et il est alors en mesure de différencier la fixation ou l'absence de l'appareil à protéger 3.

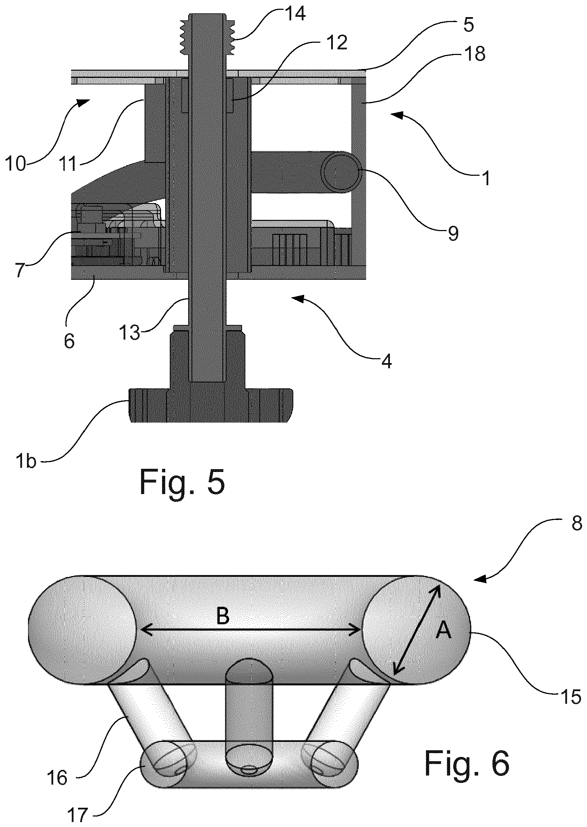

Afin de faciliter l'utilisation du dispositif de protection 1 dans des environnements divers et notamment des environnements humides, il apparaît particulièrement avantageux de prévoir l'utilisation d'un capteur de présence 10 qui comporte un capteur magnétique 11 coopérant avec un élément 12 perturbateur du champ magnétique. Le capteur magnétique 11 est configuré pour distinguer la perturbation du champ magnétique qui est représentative de la position de l'élément perturbateur 12. La position de l'élément perturbateur 12 est dépendante de l'absence et de la fixation de l'élément à protéger 3 sur le châssis 6. En d'autres termes, la fixation ou le retrait de l'appareil à protéger 3 vis-à-vis du châssis 6 entraîne un déplacement de l'élément perturbateur 12 du champ magnétique. Ce déplacement est détecté par le capteur magnétique 11. Un tel mode de réalisation est illustré à la figure 5. Le capteur magnétique 11 est préférentiellement un interrupteur magnétique qui bloque ou autorise le passage du signal de chute vers le dispositif de gonflage 9.

L'utilisation d'un capteur magnétique 11 en association avec un élément perturbateur 12 du champ magnétique permet d'éviter par exemple l'utilisation d'un capteur optique en association avec un générateur de signal lumineux qui peut être perturbé par la poussière existant dans l'environnement de travail de l'appareil à protéger 3. Cette configuration permet également de ne pas utiliser l'ouverture et la fermeture d'un circuit électrique au moyen d'un commutateur mécanique représentatif de la présence et ou de l'absence de l'appareil à protéger 3. Il s'avère que dans des utilisations de type travaux publics, ce type de capteur ne présente pas des durées de vie suffisantes.

L'utilisation d'un capteur magnétique 11 permet par exemple de séparer le capteur 11 et l'élément perturbateur 12 au moyen d'une paroi étanche ce qui facilite la maintenance du dispositif de protection 1 et augmente fortement sa durée de vie. Un tel mode de réalisation est illustré à la figure 5.

Dans un mode de réalisation particulier, élément perturbateur 12 du champ magnétique est réalisé au moyen d'un aimant c'est-à-dire un dispositif passif qui n'a pas besoin d'être alimenté en électricité et qui est particulièrement robuste vis-à-vis des chocs. Dans le mode de réalisation illustré à la figure 5, l'aimant est monté sur le premier système de fixation 4. Préférentiellement, l'aimant est monté dans une tige mobile 13 qui coopère avec l'appareil à protéger 3 afin d'assurer sa fixation sur le châssis 6.

De manière plus générale, le premier système de fixation 4 comporte une tige mobile 13 qui coopère avec l'appareil à protéger 3 afin de fixer ce dernier sur le châssis 6. Il est particulièrement avantageux de prévoir une tige 13 qui soit montée mobile en translation et/ou en rotation pour venir s'accrocher à l'appareil à protéger 3. Un mouvement en translation est préféré pour faciliter la discrimination des deux états : fixation et absence de l'appareil 3.

Dans un mode de réalisation préférentiel, la tige mobile 13 est terminée par une section filetée 14 qui vient coopérer avec un orifice taraudé pour fixer l'appareil à protéger 3 sur la platine 5 du châssis 6. La rotation de la tige mobile 13 à l'intérieur de l'orifice taraudé déplace la tige 13 en direction de l'appareil à protéger 3 de sorte que l'aimant vienne se trouver en vis-à-vis du capteur magnétique 11. Un tel mode de réalisation est illustré à la figure 5. En alternative, la fixation de l'appareil à protéger 3 sur le châssis 6 peut venir déplacer l'aimant à distance du capteur magnétique 11. De manière avantageuse, l'aimant contient du Néodyme et préférentiellement un alliage de Fer, de Bore et de Néodyme car ils permettent une bonne tenue dans le temps et une forte coercité.

En l'absence de l'appareil à protéger 3, la masse du premier système de fixation 4, ici de la tige 13 entraîne son déplacement dans une position représentative de la non-fixation de l'appareil à protéger 3 avec le châssis 6.

Dans les modes de réalisation illustrés, l'appareil à protéger 3 se trouve fixé à une paroi externe du dispositif de protection 1. Dans cette configuration, le dispositif de protection 1 est décalé vers le bas de manière à ne pas gêner le fonctionnement de l'appareil à protéger 3. Lors de son gonflage, l'enveloppe 8 est configurée de manière à se déplacer depuis le châssis 6 vers l'appareil à protéger 3.

L'ensemble formé par le pied 2, le dispositif de protection 1 et l'appareil à protéger 3 peut basculer dans toutes les directions possibles. Ainsi, l'enveloppe 8 doit être en mesure d'empêcher un contact direct entre l'appareil 3 et le sol sur 360° selon un plan horizontal. Il est particulièrement avantageux de prévoir que l'enveloppe 8 définisse un anneau 15 disposé autour de l'appareil à protéger 3 après l'étape de gonflage 9. Par anneau, on entend avantageusement un élément monobloc.

L'anneau 15 étant monobloc, il résiste mieux à l'impact en limitant sa déformation en comparaison d'une enveloppe 8 formée par plusieurs sous-enveloppes 8 élémentaires mécaniquement dissociées. Préférentiellement, l'anneau 15 présente une section circulaire dans un plan de coupe parallèle à la surface d'appui entre l'appareil à protéger 3 et le châssis 6, par exemple la surface externe de la platine 5 qui supporte l'appareil à protéger 3.

De manière particulièrement avantageuse, le dispositif de gonflage 9 est relié à l'anneau 15 par une pluralité de canaux d'alimentation 16 de sorte que l'anneau 15 se gonfle à partir de différents endroits. De manière avantageuse, deux, trois, quatre ou cinq canaux d'alimentation 16 sont utilisés pour gonfler l'anneau 15.

Afin de faciliter l'expulsion de l'enveloppe 8 hors du dispositif de protection, il est particulièrement avantageux d'utiliser un anneau additionnel 17 qui se trouve disposé face au châssis 6 après gonflage. L'anneau additionnel 17 présente un diamètre inférieur ou égal au diamètre de l'anneau 15. De manière avantageuse, l'anneau 15 est alimenté et relié au dispositif de gonflage 9 par au moins deux canaux distincts qui relient l'anneau additionnel 17 et l'anneau 15. Cette configuration permet de gonfler initialement l'anneau additionnel puis l'anneau 15 en utilisant la même source de gaz. En alternative, deux sources de gaz peuvent être utilisées pour gonfler consécutivement l'anneau additionnel 17 puis l'anneau 15.

Dans cette configuration, le gaz émis par le dispositif de gonflage 9 vient gonfler l'anneau additionnel 17 qui éjecte l'anneau 15 hors du châssis 6. L'éjection de l'anneau 15 avant que ce dernier soit gonflé facilite la mise en place de l'anneau 15 et assure un gonflement plus homogène. Avant gonflage, l'anneau 15 est disposé à la périphérie de l'anneau additionnel 17 pour faciliter son éjection.

Lors de son déplacement en direction de l'appareil à protéger 3, l'anneau 15 se trouve hors du châssis 6 et peut donc se déplacer vers l'appareil 3 sans contrainte.

Dans un mode de réalisation particulier, une bande 18 est fixée de manière amovible au châssis 6 et elle est disposée autour du châssis 6. L'enveloppe 8 est installée entre le châssis 6 et la bande 18 avant le gonflage de l'enveloppe 8. La bande 18 présente au moins une zone de faiblesse s'étendant depuis une extrémité à l'autre de la bande au moins selon une direction perpendiculaire à une surface d'appui de l'appareil à protéger 3 sur le châssis 6. En d'autres termes, la zone de faiblesse s'étend au moins selon une direction verticale lorsque le dispositif de protection 1 est monté sur le pied 2. La bande 18 se déchire lors du gonflage de l'enveloppe 8.

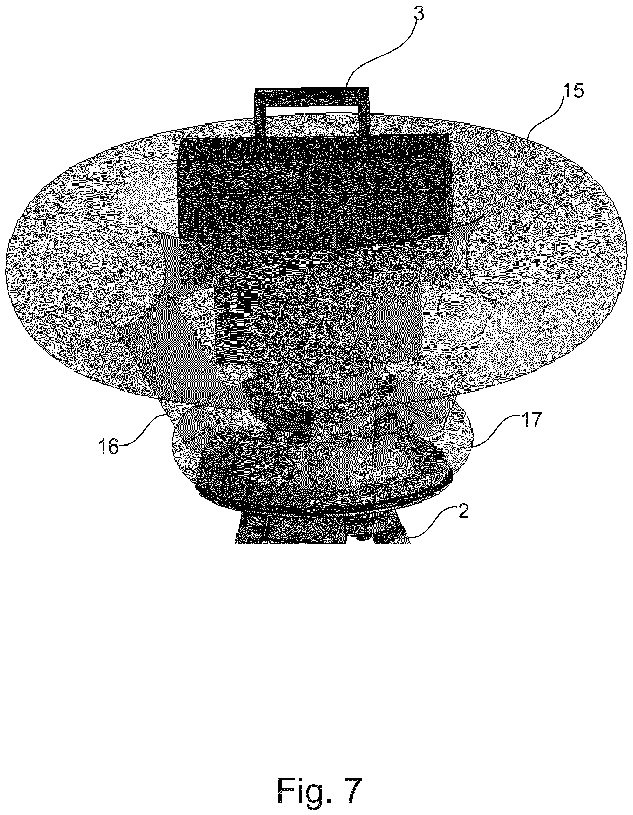

À réception du signal de chute, le dispositif de gonflage 9 émet un gaz en direction de l'enveloppe 8. Ce gaz gonfle l'anneau additionnel 17 qui force sur la bande 18 et cette dernière se déchire sous l'effort appliqué par l'anneau additionnel 17 afin d'autoriser l'expulsion de l'anneau 15 hors du châssis 6. L'anneau 15 est ensuite gonflé, hors du châssis 6, au moyen des canaux d'alimentation 16. La configuration finale de l'anneau 15 et de l'anneau additionnel 17 est représentée aux figures 6 et 7.

Il est particulièrement intéressant de prévoir que la bande 18 soit réalisée dans une matière plastique et préférentiellement en caoutchouc. Ainsi, la déchirure de la bande 18 ne produit pas de débris capables de lacérer l'anneau 15 et entraîner une fuite du gaz provenant du dispositif de gonflage 9. La bande 18 permet de protéger l'enveloppe 8 avant son gonflage.

Lors du gonflage de l'enveloppe 8, la bande 18 qui se situe sur toute la périphérie du châssis 6 s'éjecte. Comme indiqué plus haut, la rupture de la zone fragile permet d'ouvrir la bande 18 et facilite son éjection du châssis 6.

Dans un mode de fonctionnement avantageux, le dispositif de détection 7 est configuré pour détecter un mouvement vertical vers le haut de plusieurs centimètres de préférence au moins 10 centimètres. Lors de la détection de ce mouvement, le dispositif de détection empêche l'émission d'un signal de chute pendant plusieurs centaines de millisecondes, par exemple entre 300ms et 900ms si un éventuel mouvement vers le bas est détecté juste après. Cette configuration permet de pouvoir porter le pied 2 et le dispositif de protection 1 sur l'épaule de l'utilisateur sans avoir un déclenchement non recherché de l'enveloppe 8. Le basculement sur l'épaule n'est pas considéré comme une chute.

Pour protéger un appareil, il est particulièrement intéressant de prévoir la fourniture d'un dispositif de protection 1 muni d'un châssis 6 comportant :
∘ un système de détection 7 de chute configuré pour détecter un mouvement vers le bas du châssis 6 et émettre un signal de chute,
∘ un dispositif de gonflage 9 configuré pour gonfler une enveloppe 8 lors de la réception du signal de chute.

Ensuite, il est intéressant de fixer l'appareil à protéger 3 sur le châssis 6 de sorte que le capteur de présence 10 bascule d'une configuration correspondant à l'absence de l'appareil à protéger 3 sur le châssis 6 à une configuration correspondant à la présence l'appareil à protéger 3 sur le châssis 6 et de sorte que le capteur de présence 10 autorise la réception du signal de chute par le dispositif de gonflage 9.

Lors de la détection d'un mouvement vers le bas du châssis 6, un signal de chute est émis au moyen du système de détection 7 de chute. L'enveloppe 8 est gonflée au moyen du dispositif de gonflage 9 suite à la réception du signal de chute.

Dans un mode de réalisation avantageux, le dispositif de détection 7 de chute comporte un groupe de capteurs qui est fixé au châssis 6. Ce groupe de capteurs est configuré pour suivre, en temps réel, la position de l'appareil à protéger 3 dans l'espace. Le groupe de capteurs peut donc déterminer si l'appareil à protéger 3 se déplace ou s'il est immobile. Le groupe de capteurs est configuré pour détecter si le déplacement de l'appareil à protéger 3 est représentatif d'une chute. La détection de chute peut se faire en mesurant la vitesse de déplacement de l'appareil à protéger 3 selon la direction verticale ou l'accélération de l'appareil à protéger 3 selon la direction verticale. En d'autres termes, le groupe de capteurs 2 est configuré pour détecter si le déplacement de l'appareil à protéger 3 possède une composante verticale avec une vitesse ou une accélération qui est supérieure à une valeur seuil. Par verticale ou direction verticale, on entend un déplacement selon le vecteur gravité.

Le groupe de capteurs peut comporter un ou plusieurs accéléromètres et/ou un ou plusieurs gyroscopes qui sont configurés pour suivre la position de l'appareil à protéger 3 dans l'espace.

De manière avantageuse, le groupe d'accéléromètres est configuré pour former un accéléromètre trois axes ce qui permet de détecter l'accélération et/ou la vitesse linéaire selon trois directions orthogonales. De cette manière, le dispositif de protection 1 détecte plus facilement une chute.

Il est également avantageux de prévoir que le groupe de capteurs 2 comporte un ou plusieurs gyroscopes afin de détecter les accélérations angulaires. Détecter les accélérations angulaires permet de mieux détecter les conditions de chute. De manière avantageuse, le groupe de gyroscopes est configuré pour former un gyroscope trois axes ce qui permet de détecter l'accélération et/ou la vitesse angulaire selon trois directions orthogonales. De cette manière, le dispositif de protection 1 détecte plus facilement une chute dans toutes les configurations.

Le groupe de capteurs fournit une première information représentative de la chute. Cette première information est envoyée à un circuit de commande (non représenté). La première information peut comporter une ou plusieurs accélérations linéaires et éventuellement une ou plusieurs accélérations angulaires. Il est également possible de délivrer une ou plusieurs vitesses linéaires et/ou vitesses angulaires.

Lorsque le circuit de commande détecte que la vitesse de déplacement de l'appareil à protéger 3 se fait verticalement et vers le bas au-delà d'une valeur seuil, le dispositif de détection considère que l'appareil à protéger 3 chute et que l'impact contre le sol est imminent. Une constatation identique peut être faite si l'accélération dépasse une valeur seuil.

Si l'accélération dépasse une accélération seuil, il n'est pas alors nécessaire d'attendre que la vitesse dépasse la vitesse seuil. De la même manière, si la vitesse dépasse la vitesse seuil, il n'est pas nécessaire d'attendre que l'accélération atteigne la valeur seuil. Cependant, cette deuxième condition est plus compliquée à détecter car la chute intervient très rapidement de sorte qu'une mesure d'accélération semble plus efficace.

Si le circuit de commande détecte que la vitesse ou l'accélération verticale atteint une valeur seuil alors le circuit de commande émet un signal de chute ou au moins un signal de chute.

Le groupe de capteurs est avantageusement configuré pour distinguer un déplacement vertical vers le bas et un déplacement vertical vers le haut. En effet, un déplacement vertical vers le haut n'est pas représentatif d'une situation à risque et il n'y a pas lieu d'envoyer un signal représentatif de la chute. Cette précision permet de réduire le taux d'émission de signaux erronés.

Afin d'augmenter l'acceptabilité du dispositif de détection par les utilisateurs, il convient de réduire autant que possible le volume occupé par le dispositif de détection. Il est donc particulièrement avantageux d'utiliser des composants miniaturisés et notamment les capteurs les plus petits possibles.

De manière particulièrement avantageuse, le dispositif de détection 7 est installé dans le châssis 6 à l'intérieur de l'anneau 15 défini par l'enveloppe 8 à gonfler. Ainsi, le dispositif de détection fixé au châssis 6 suit la position exacte de l'appareil à protéger 3 sans gêner l'éjection et le gonflage de l'enveloppe 8. Cette configuration permet de faciliter un déploiement rapide et homogène de l'anneau 15.

Il est avantageux de prévoir que le groupe de capteurs 2 soit associé à au moins un capteur additionnel qui comporte un ou plusieurs télémètres qui sont configurés pour calculer la distance entre une zone de l'appareil à protéger 3 et le sol. Le télémètre peut être un télémètre laser, un télémètre infrarouge ou un télémètre à ultrasons. L'utilisation d'un télémètre permet de mesurer régulièrement la distance qui sépare une zone de référence de l'appareil à protéger 3 avec le sol ce qui permet d'envoyer le signal de manière optimisée c'est-à-dire lorsque la distance entre la zone de référence de l'appareil à protéger 3 et le sol est comprise dans une gamme prédéterminée. Cette mesure supplémentaire peut être particulièrement avantageuse lorsque l'appareil à protéger 3 réalise des mouvements verticaux vers le haut et vers le bas.

Le dispositif de protection 1 étant un dispositif mobile, il est nécessaire d'alimenter le dispositif de protection 1 au moyen d'une batterie. Il convient donc de limiter autant que possible la consommation électrique des différents éléments qui constituent le dispositif de détection 1. Afin de réduire la consommation électrique, il est particulièrement avantageux d'utiliser des accéléromètres et des gyroscopes miniaturisés. Par exemple, les accéléromètres et les gyroscopes sont réalisés en technologie MEMS, c'est-à-dire des microsystèmes électromécaniques.

Il apparaît également particulièrement intéressant de prévoir que la batterie qui alimente les différents composants du dispositif de protection 1 soit disposée à l'intérieur de l'anneau 15 défini par l'enveloppe 8 pour ne pas gêner le gonflage de l'enveloppe 8.

Dans le domaine de la mesure de topographie et/ou dans le domaine de la prise de vue ou de la photographie, les utilisateurs possèdent un ou plusieurs trépieds et plus généralement des pieds 2 ainsi que plusieurs appareils à protéger 3. Il est donc particulièrement avantageux de prévoir que le dispositif de protection 1 réalise l'interface entre les pieds 2 et les appareils à protéger 3. Le dispositif de protection 1 est alors installé entre le pied 2 et l'appareil à protéger 3.

Dans un mode de réalisation préférentiel, l'enveloppe 8 définit un anneau 15 qui fait face au centre de gravité de l'appareil à protéger 3. En d'autres termes, il existe un plan parallèle à la face externe du châssis 6 et ce plan contient le centre de gravité de l'appareil 3 et traverse l'enveloppe 8 au niveau de l'anneau 15.

Dans un mode de réalisation particulier, le dispositif de protection 1 est configuré de sorte que le temps de déploiement et de gonflage de l'enveloppe 8 soit inférieur à 500ms et préférentiellement 200ms. Avec une telle réactivité, le dispositif de détection 7 est en mesure de détecter une chute avant que la cible 3 entre en contact avec le sol dans sa zone de référence et d'envoyer un signal S représentatif de cette chute.

Pour gagner en compacité sans pour autant gêner le gonflage de l'enveloppe 8, il est particulièrement avantageux d'installer les dispositifs électroniques ainsi que le dispositif de gonflage 9 à l'intérieur du volume délimité par l'enveloppe 8 en attente de gonflage. Il est également avantageux de prévoir que le dispositif de gonflage 9 possède un élément pyrotechnique qui se situe à l'intérieur de l'anneau 15 de l'enveloppe 8.

Il est particulièrement avantageux de prévoir que l'appareil à protéger 3 soit un théodolite.

Selon les configurations, l'appareil à protéger 3 peut être un dispositif optique ou un émetteur récepteur de rayonnement électromagnétique. À titre d'exemple l'objet à protéger 3 peut être un appareil photographique, une caméra, un instrument de géodésie, un théodolite, un tachéomètre. Cependant, un ordinateur ou un autre instrument placé sur un trépied 10 peut être protégé de la même manière.

Avantageusement, le système de détection 7 mesure en continu les mouvements du châssis 6 ou avec une différence inférieure à 5ms entre deux mesures de manière à déterminer un mouvement du châssis 6 qui correspond à un basculement c'est-à-dire que le mouvement du châssis comporte une composante verticale dont la vitesse est supérieure à une vitesse seuil et/ou donc l'accélération verticale est supérieure à une accélération seuil. Cette information mesurée par le système de détection 7 peut être envoyée à un circuit de commande 4 qui va traiter cette information et la comparer à un seuil afin de déterminer si le mouvement est compatible avec une chute.

Si le circuit de commande détermine que le châssis réalise une chute, le circuit de commande 4 émet le signal S qui peut déclencher le gonflage de l'enveloppe 8.

Il est particulièrement avantageux d'utiliser un tel procédé de protection et/ou un tel système de protection pour former complètement ou partiellement un équipement de protection, par exemple un équipement de protection de la gamme « opti'safe ».

## Revendications

1. Procédé de protection d'un appareil (3) :
- fournir un dispositif de protection (1) comportant :
∘ un châssis (6) muni d'une platine (5),
∘ un système de détection (7) de chute configuré pour détecter un mouvement vers le bas du châssis (6) représentatif d'un basculement du châssis (6) et émettre un signal de chute,
∘ un dispositif de fixation (4) configuré pour fixer l'appareil (3) sur la platine (5) du dispositif de protection (1),
- détecter un mouvement vers le bas du châssis (6) représentatif d'un basculement et émettre un signal de chute au moyen du système de détection (7) de chute,
- gonfler au moins une enveloppe (8) destinée à entourer l'appareil (3) lors de la réception du signal de chute au moyen du dispositif de gonflage (9), la au moins une enveloppe (8) étant fixée au châssis (6),
procédé de protection **caractérisé en ce que** la détection d'un mouvement du châssis (6) vers le haut précédant la détection dudit mouvement du châssis (6) vers le bas empêche la réception d'un signal de chute par le dispositif de gonflage (9), la détection du mouvement du châssis (6) vers le haut et la détection dudit mouvement du châssis (6) vers le bas étant séparées de moins de 10 secondes.

2. Procédé de protection selon la revendication 1 dans lequel le système de détection (7) de chute est configuré pour mesurer la vitesse ou l'accélération selon la direction verticale et détecter un mouvement représentatif d'une chute lorsque la vitesse ou l'accélération mesurée est supérieure à une valeur seuil.

3. Procédé de protection selon l'une quelconque des revendications précédentes dans lequel la au moins une enveloppe (8) forme un anneau (15) destiné à entourer l'appareil (3), préférentiellement à distance de l'appareil (3).

4. Procédé de protection selon l'une quelconque des revendications précédentes dans lequel la au moins une enveloppe (8) comporte une première sous-enveloppe (17) et une deuxième sous-enveloppe (15) et dans lequel la première sous-enveloppe (17) est gonflée avant la deuxième sous-enveloppe (15), le gonflage de la première sous-enveloppe (17) poussant la deuxième sous-enveloppe (15) à distance du châssis (6) avant le gonflage de la deuxième sous-enveloppe (15).

5. Procédé de protection selon la revendication précédente dans lequel la deuxième sous-enveloppe (15) est gonflée à partir d'un gaz provenant de la première sous-enveloppe (17).

6. Procédé de protection selon la revendication précédente dans lequel la première sous-enveloppe définit un anneau additionnel (17) disposé face au châssis (6), l'anneau additionnel (17) ayant un diamètre inférieur ou égal au diamètre de l'anneau (15), l'anneau (15) étant relié à l'anneau additionnel (17) par au moins deux canaux (16) distincts.

7. Procédé de protection selon l'une des revendications précédentes dans lequel avant gonflage, une bande sacrificielle (18) entoure la au moins une enveloppe (8), la bande sacrificielle (18) étant séparée du châssis (6) par la au moins une enveloppe (8) et dans lequel le gonflage de la au moins une enveloppe (8) déchire la bande sacrificielle (18).

8. Procédé de protection selon l'une quelconque des revendications précédentes dans lequel la au moins une enveloppe (8) forme un anneau ayant une section circulaire selon un plan perpendiculaire au châssis (6).

9. Procédé de protection selon l'une quelconque des revendications précédentes dans lequel le dispositif de protection (1) comporte un pied (2) ou des moyens de fixation d'un pied au dispositif de protection (1), le dispositif de protection (1) séparant le pied (2) et l'appareil (3).

10. Procédé de protection selon l'une quelconque des revendications précédentes dans lequel le dispositif de protection (1) comporte un capteur de présence (10) configuré pour détecter la fixation et l'absence de fixation de l'appareil (3) sur le châssis (6), le capteur de présence (10) étant configuré pour autoriser la réception du signal de chute par le dispositif de gonflage (9) lorsque le capteur de présence (10) détecte la fixation de l'appareil (3) et empêcher la réception du signal de chute par le dispositif de gonflage (9) lorsque le capteur de présence (10) détecte l'absence de fixation de l'appareil (3).

11. Procédé de protection selon la revendication précédente dans lequel le capteur de présence (10) est configuré pour éteindre le système de détection (7) lorsque le capteur de présence (10) détecte l'absence de fixation de l'appareil (3).

12. Procédé de protection selon l'une des revendications 10 et 11 dans lequel le capteur de présence (10) comporte un capteur magnétique coopérant avec un élément perturbateur du champ magnétique représentatif de l'absence ou de la fixation de l'appareil à protéger (3) sur le châssis (6).

13. Procédé de protection selon l'une des revendications précédentes dans lequel le premier système de fixation (4) comporte une tige mobile (13) coopérant avec l'appareil (3) et dans lequel le capteur de présence (10) détecte la position de la tige (13) par rapport au châssis (6).

14. Dispositif de protection comportant :
- un châssis (6) muni d'un système de détection (7) de chute, le système de détection (7) de chute étant configuré pour détecter un mouvement vers le bas du châssis (6) représentatif d'un basculement et émettre un signal de chute,
- un premier système de fixation configuré pour fixer le châssis (6) avec un appareil à protéger (3),
- un dispositif de gonflage (9) relié d'une part au système de détection et d'autre part à une enveloppe (8), le dispositif de gonflage (9) étant configuré pour gonfler l'enveloppe (8) lors de la réception du signal de chute,
**caractérisé en ce qu'**il comporte un capteur de présence (10) configuré pour détecter la présence et l'absence de l'appareil à protéger (3) sur le châssis (6), le capteur de présence (10) étant configuré pour autoriser la réception du signal de chute par le dispositif de gonflage (9) lorsque le capteur de présence (10) détecte la présence de l'appareil à protéger (3) et empêcher la réception du signal de chute par le dispositif de gonflage (9) lorsque le capteur de présence (10) détecte l'absence de l'appareil à protéger (3),
et **en ce que** le système de détection (7) est configuré de sorte que la détection d'un mouvement du châssis (6) vers le haut précédant la détection dudit mouvement du châssis (6) vers le bas empêche la réception d'un signal de secours par le dispositif de gonflage (9), la détection du mouvement du châssis (6) vers le haut et la détection dudit mouvement du châssis (6) vers le bas étant séparées de moins de 10 secondes.

15. Dispositif de protection selon la revendication précédente dans lequel l'anneau (15) présente une section circulaire dans un plan de coupe parallèle à une surface d'appui de l'appareil à protéger (3) sur le châssis (6).

## Patentansprüche

1. Verfahren zum Schutz eines Geräts (3):
- Bereitstellen einer Schutzvorrichtung (1), umfassend:
∘ ein Gehäuse (6), das mit einer Platte (5) versehen ist,
∘ ein Sturzdetektionssystem (7), das dazu konfiguriert ist, eine Abwärtsbewegung des Gehäuses (6), die für ein Umkippen des Gehäuses (6) repräsentativ ist, zu detektieren und ein Sturzsignal auszugeben,
∘ eine Befestigungsvorrichtung (4), die dazu konfiguriert ist, das Gerät (3) auf der Platte (5) der Schutzvorrichtung (1) zu befestigen,
- Detektieren, durch das Sturzdetektionssystem (7), einer Abwärtsbewegung des Gehäuses (6), die für ein Umkippen repräsentativ ist, und Ausgeben eines Sturzsignals,
- Aufblasen, bei Empfang des Sturzsignals durch die Aufblasvorrichtung (9), mindestens einer Hülle (8), die dazu bestimmt ist, das Gerät (3) zu umgeben, wobei die mindestens eine Hülle (8) am Gehäuse (6) befestigt ist,
wobei das Schutzverfahren **dadurch gekennzeichnet ist, dass** die Detektion einer Aufwärtsbewegung des Gehäuses (6) vor der Detektion einer Abwärtsbewegung des Gehäuses (6) den Empfang eines Sturzsignals durch die Aufblasvorrichtung (9) verhindert, wobei die Detektion der Aufwärtsbewegung des Gehäuses (6) und die Detektion der Abwärtsbewegung des Gehäuses (6) weniger als 10 Sekunden auseinander liegen.

2. Schutzverfahren nach Anspruch 1, wobei das Sturzdetektionssystem (7) dazu konfiguriert ist, die Geschwindigkeit oder die Beschleunigung in der vertikalen Richtung zu messen und eine Bewegung, die für einen Sturz repräsentativ ist, zu detektieren, wenn die gemessene Geschwindigkeit oder Beschleunigung einen Schwellenwert übersteigt.

3. Schutzverfahren nach einem der vorherigen Ansprüche, wobei die mindestens eine Hülle (8) einen Ring (15) bildet, der dazu bestimmt ist, das Gerät (3) bevorzugt in einem Abstand vom Gerät (3) zu umgeben.

4. Schutzverfahren nach einem der vorherigen Ansprüche, wobei die mindestens eine Hülle (8) eine erste Unterhülle (17) und eine zweite Unterhülle (15) umfasst, und wobei die erste Unterhülle (17) vor der zweiten Unterhülle (15) aufgeblasen wird, wobei die zweite Unterhülle (15) durch das Aufblasen der ersten Unterhülle (17) vom Gehäuse (6) weggedrückt wird, bevor die zweite Unterhülle (15) aufgeblasen wird.

5. Schutzverfahren nach dem vorherigen Anspruch, wobei die zweite Unterhülle (15) mit einem Gas aus der ersten Unterhülle (17) aufgeblasen wird.

6. Schutzverfahren nach dem vorherigen Anspruch, wobei die erste Unterhülle einen zusätzlichen Ring (17) definiert, der dem Gehäuse (6) gegenüberliegend angeordnet ist, wobei der zusätzliche Ring (17) einen Durchmesser hat, der kleiner oder gleich dem Durchmesser des Rings (15) ist, und der Ring (15) durch mindestens zwei getrennte Kanäle (16) mit dem zusätzlichen Ring (17) verbunden ist.

7. Schutzverfahren nach einem der vorherigen Ansprüche, wobei vor dem Aufblasen ein Opferband (18) die mindestens eine Hülle (8) umgibt, wobei das Opferband (18) durch die mindestens eine Hülle (8) vom Gehäuse (6) getrennt ist, und wobei das Opferband (18) durch das Aufblasen der mindestens einen Hülle (8) zerrissen wird.

8. Schutzverfahren nach einem der vorherigen Ansprüche, wobei die mindestens eine Hülle (8) einen Ring bildet, der in einer Ebene senkrecht zum Gehäuse (6) einen kreisförmigen Querschnitt hat.

9. Schutzverfahren nach einem der vorherigen Ansprüche, wobei die Schutzvorrichtung (1) einen Fuß (2) oder Mittel zur Befestigung eines Fußes an die Schutzvorrichtung (1) umfasst, wobei die Schutzvorrichtung (1) den Fuß (2) und das Gerät (3) trennt.

10. Schutzverfahren nach einem der vorherigen Ansprüche, wobei die Schutzvorrichtung (1) einen Präsenzmelder (10) umfasst, der dazu konfiguriert ist, die Befestigung und die Abwesenheit des Geräts (3) auf dem Gehäuse (6) zu detektieren, wobei der Präsenzmelder (10) dazu konfiguriert ist, den Empfang des Sturzsignals durch die Aufblasvorrichtung (9) zuzulassen, wenn der Präsenzmelder (10) die Befestigung der Vorrichtung (3) detektiert, und den Empfang des Sturzsignals durch die Aufblasvorrichtung (9) zu verhindern, wenn der Präsenzmelder (10) die Abwesenheit der Vorrichtung (3) detektiert.

11. Schutzverfahren nach dem vorherigen Anspruch, wobei der Präsenzmelder (10) dazu konfiguriert ist, das Detektionssystem (7) auszuschalten, wenn der Präsenzmelder (10) die Abwesenheit der Vorrichtung (3) detektiert.

12. Schutzverfahren nach einem der Ansprüche 10 und 11, wobei der Präsenzmelder (10) einen Magnetsensor umfasst, der mit einem Störelement des Magnetfelds zusammenwirkt, das für die Abwesenheit oder die Befestigung des zu schützenden Geräts (3) auf dem Gehäuse (6) repräsentativ ist.

13. Schutzverfahren nach einem der vorherigen Ansprüche, wobei das erste Befestigungssystem (4) eine bewegliche Stange (13) umfasst, die mit dem Gerät (3) zusammenwirkt, und wobei der Präsenzmelder (10) die Position der Stange (13) in Bezug auf das Gehäuse (6) detektiert.

14. Schutzvorrichtung, umfassend:
- ein Gehäuse (6), das mit einem Sturzdetektionssystem (7) versehen ist, wobei das Sturzdetektionssystem (7) dazu konfiguriert ist, eine Abwärtsbewegung des Gehäuses (6), die für ein Umkippen repräsentativ ist, zu detektieren und ein Sturzsignal auszugeben,
- ein erstes Befestigungssystem, das dazu konfiguriert ist, das Gehäuse (6) an ein zu schützendes Gerät (3) zu befestigen,
- eine Aufblasvorrichtung (9), die einerseits mit dem Detektionssystem und andererseits mit einer Hülle (8) verbunden ist, wobei die Aufblasvorrichtung (9) dazu konfiguriert ist, die Hülle (8) bei Empfang des Sturzsignals aufzublasen,
**dadurch gekennzeichnet, dass** sie einen Präsenzmelder (10) umfasst, der dazu konfiguriert ist, die Anwesenheit und Abwesenheit des zu schützenden Geräts (3) auf dem Gehäuse (6) zu detektieren, wobei der Präsenzmelder (10) dazu konfiguriert ist, den Empfang des Sturzsignals durch die Aufblasvorrichtung (9) zuzulassen, wenn der Präsenzmelder (10) die Anwesenheit des zu schützenden Geräts (3) detektiert, und den Empfang des Sturzsignals durch die Aufblasvorrichtung (9) zu verhindern, wenn der Präsenzmelder (10) die Abwesenheit des zu schützenden Geräts (3) detektiert,
und dadurch, dass das Detektionssystem (7) derart konfiguriert ist, dass die Detektion einer Aufwärtsbewegung des Gehäuses (6) vor der Detektion einer Abwärtsbewegung des Gehäuses (6) den Empfang eines Notfallsignals durch die Aufblasvorrichtung (9) verhindert, wobei die Detektion der Aufwärtsbewegung des Gehäuses (6) und die Detektion der Abwärtsbewegung des Gehäuses (6) weniger als 10 Sekunden auseinander liegen.

15. Schutzvorrichtung nach dem vorherigen Anspruch, wobei der Ring (15) in einer Schnittebene parallel zu einer Auflagefläche des zu schützenden Geräts (3) auf dem Gehäuse (6) einen kreisförmigen Querschnitt aufweist.

## Claims

1. Protection method of a piece of equipment (3):
- provide a protection device (1) comprising:
∘ a frame (6) provided with a plate (5),
∘ a fall detection system (7) configured to detect a downward movement of the frame (6) representative of tilting of the frame (6) and to emit a fall signal,
∘ a fixing device (4) configured to fix the piece of equipment (3) onto the plate (5) of the protection device (1),
- detect a downward movement of the frame (6) representative of tilting and emit a fall signal by means of the fall detection system (7),
- inflate at least one casing (8) designed to surround the piece of equipment (3) on receipt of the fall signal by means of the inflation device (9), the at least one casing (8) being fixed to the frame (6),
protection method **characterised in that** detection of an upward movement of the frame (6) preceding detection of said downward movement of the frame (6) prevents receipt of a fall signal by the inflation device (9), detection of the upward movement of the frame (6) and detection of said downward movement of the frame (6) being separated by less than 10 seconds.

2. Protection method according to claim 1 wherein the fall detection system (7) is configured to measure the speed or acceleration in the vertical direction and to detect a movement representative of a fall when the measured speed or acceleration is greater than a threshold value.

3. Protection method according to either one of the foregoing claims wherein the at least one casing (8) forms a ring (15) designed to surround the piece of equipment (3), preferentially at a distance from the piece of equipment (3).

4. Protection method according to any one of the foregoing claims wherein the at least one casing (8) comprises a first sub-casing (17) and a second sub-casing (15) and wherein the first sub-casing (17) is inflated before the second sub-casing (15), inflation of the first sub-casing (17) pushing the second sub-casing (15) away from the frame (6) before inflation of the second sub-casing (15).

5. Protection method according to the foregoing claim wherein the second sub-casing (15) is inflated from a gas originating from the first sub-casing (17).

6. Protection method according to the foregoing claim wherein the first sub-casing defines an additional ring (17) arranged facing the frame (6), the additional ring (17) having a diameter that is smaller than or equal to the diameter of the ring (15), the ring (15) being connected to the additional ring (17) by at least two distinct channels (16).

7. Protection method according to one of the foregoing claims wherein before inflation, a sacrificial strip (18) surrounds the at least one casing (8), the sacrificial strip (18) being separated from the frame (6) by the at least one casing (8) and wherein inflation of the at least one casing (8) tears the sacrificial strip (18).

8. Protection method according to any one of the foregoing claims wherein the at least one casing (8) forms a ring having a circular cross-section in a plane perpendicular to the frame (6).

9. Protection method according to any one of the foregoing claims wherein the protection device (1) comprises a leg (2) or means for fixing a leg to the protection device (1), the protection device (1) separating the leg (2) and the piece of equipment (3).

10. Protection method according to any one of the foregoing claims wherein the protection device (1) comprises a presence sensor (10) configured to detect whether the equipment (3) has been fixed on the frame (6) or not, the presence sensor (10) being configured to enable receipt of the fall signal by the inflation device (9) when the presence sensor (10) detects that the piece of equipment (3) has been fixed and to prevent receipt of the fall signal by the inflation device (9) when the presence sensor (10) detects that the piece of equipment (3) has not been fixed.

11. Protection method according to the foregoing claim wherein the presence sensor (10) is configured to switch the detection system (7) off when the presence sensor (10) detects that the piece of equipment (3) has not been fixed.

12. Protection method according to one of claims 10 and 11 wherein the presence sensor (10) comprises a magnetic sensor operating in conjunction with a disruptive element of the magnetic field representative of whether the piece of equipment to be protected (3) is fixed on the frame (6) or not.

13. Protection method according to one of the foregoing claims wherein the first fixing system (4) comprises a movable shank (13) operating in conjunction with the equipment (3) and wherein the presence sensor (10) detects the position of the shank (13) with respect to the frame (6).

14. Protection device comprising:
- a frame (6) equipped with a fall detection system (7), the fall detection system (7) being configured to detect a downward movement of the frame (6) representative of tilting and to emit a fall signal,
- a first fixing system configured to secure the frame (6) to a piece of equipment to be protected (3),
- an inflation device (9) connected on the one hand to the detection system and on the other hand to a casing (8), the inflation device (9) being configured to inflate the casing (8) on receipt of the fall signal,
**characterised in that** it comprises a presence sensor (10) configured to detect the presence and absence of the piece of equipment to be protected (3) on the frame (6), the presence sensor (10) being configured to enable receipt of the fall signal by the inflation device (9) when the presence sensor (10) detects the presence of the piece of equipment to be protected (3) and to prevent receipt of the fall signal by the inflation device (9) when the presence sensor (10) detects the absence of the piece of equipment to be protected (3),
and **in that** the detection system (7) is configured in such a way that detection of an upward movement of the frame (6) preceding detection of said downward movement of the frame (6) prevents receipt of an emergency signal by the inflation device (9), detection of upward movement of the frame (6) and detection of said downward movement of the frame (6) being separated by less than 10 seconds.

15. Protection device according to the foregoing claim wherein the ring (15) presents a circular cross-section in a cutting plane parallel to a support surface of the piece of equipment to be protected (3) on the frame (6).
